# EUROPEAN PATENT APPLICATION

(11) **EP 4 379 008 A1**
(43) Date of publication of application: **05.06.2024**
(21) Application number: 22211140.3
(22) Date of filing: 02.12.2022
(51) Int. Cl.: C09D 107/00, C08J 3/09, C08K 5/01, C09J 107/00

(54) **BIO BASED NATURAL RUBBER SOLUTIONS**

(71) Applicant: Fraunhofer-Gesellschaft zur Förderung der angewandten Forschung e.V., 80686 München (DE)
(72) Inventor: Schulze Gronover, Christian, 48143 Münster (DE); Müller, Lowis-Gerrit-Boje, 48143 Münster (DE)
(74) Representative: Maiwald GmbH

(57) **Abstract**

The present invention relates to a natural rubber solution that is obtained by dissolving natural rubber in a terpene, the process to obtain the natural rubber solution and uses thereof.

## Description

### Technical Field

The present invention relates to a natural rubber solution that is obtained by dissolving natural rubber in a terpene, the process to obtain the natural rubber solution and uses thereof.

### Technical Background

Natural rubber is a plant-produced polymeric material and primarily consists of cis-1,4- 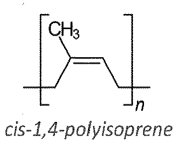 polyisoprene.

The majority of the worldwide harvested natural rubber finds its use as a key raw material in the manufacturing of tyres. With over 1.4 billion cars worldwide, the demand for natural rubber remains immense.

Latex, the aqueous emulsion in which the natural rubber is synthesized and stored as droplets can be harvested from rubber trees or other polyisoprene-producing plants, like guayule or dandelions. The rubber tree *Hevea brasiliensis,* which grows in the tropical regions of West Africa, South America and Southeast Asia is the primary source for industrial natural rubber. Usually, the natural rubber is obtained from the latex by precipitation and is commercially available in its solid, undissolved form.

While the aqueous latex can be stabilized for example by adding ammonia or ethanolamine to the emulsion, so far the only known way to obtain a solution of solid natural rubber is by petrochemical solvents, e.g. benzene, toluene, hexane or chloroform.

Since most petrochemical solvents are toxic and highly flammable, processes including petrochemical solvents need to have increased security measures in order to protect workers and the production plants from harm. This limits the production and applicability of natural rubber solutions immensely.

After extensive studies in this field, it has now been surprisingly found, that terpenes are exceptionally good solvating agents for natural rubbers and the resulting natural rubber solutions can be used directly as viscoelastic liquids or to produce natural rubber mixtures. Furthermore, when using natural terpenes, a completely bio-based natural rubber solution can be obtained without the need for petrochemical solvents.

Patent application WO 2013/086407 A1 discloses a water-based adhesive comprising latex, a terpene as penetrant and a reinforcing filler.

### Summary of the invention

In one aspect the present invention relates to a natural rubber solution, characterized in that the solution comprises
i) a natural rubber, and
ii) at least one terpene.

In a further aspect the present invention relates to a process for obtaining the natural rubber solution as described above or below, characterized in that the process comprises the following steps:
a. Providing a natural rubber;
b. Adding the natural rubber to a liquid terpene to obtain a mixture of solid natural rubber in liquid terpene; and
c. Incubating the mixture obtained in step b at a temperature in the range of 25 °C to 60°C, preferably 30°C to 50°, more preferably 35°C to 45°C until the natural rubber is dissolved.

In another aspect the present invention relates to process for obtaining a cross-linked natural rubber, characterized in that the process for obtaining the natural rubber solution as described above or below further comprises additional steps
d. Adding a cross-linking agent;
e. Drying the natural rubber solution containing a cross-linking agent; and
f. Heating the dried natural rubber containing a cross-linking agent obtained in step e.

In yet another aspect the present invention relates to cross-linked natural rubber obtainable by the process for obtaining a cross-linked natural rubber as described above or below having a glass transition temperature of from -70°C to -43°C, measured as tan δ in a dynamic mechanical analysis.

In a final aspect the present invention relates to the use of the natural rubber solution as described above or below as a thickener, opacifier, lubricant, paint, as a basis for solid natural rubber and in elastic coatings, elastic joints, elastic moldings, elastic sealings and elastic films.

### Brief description of the Figures

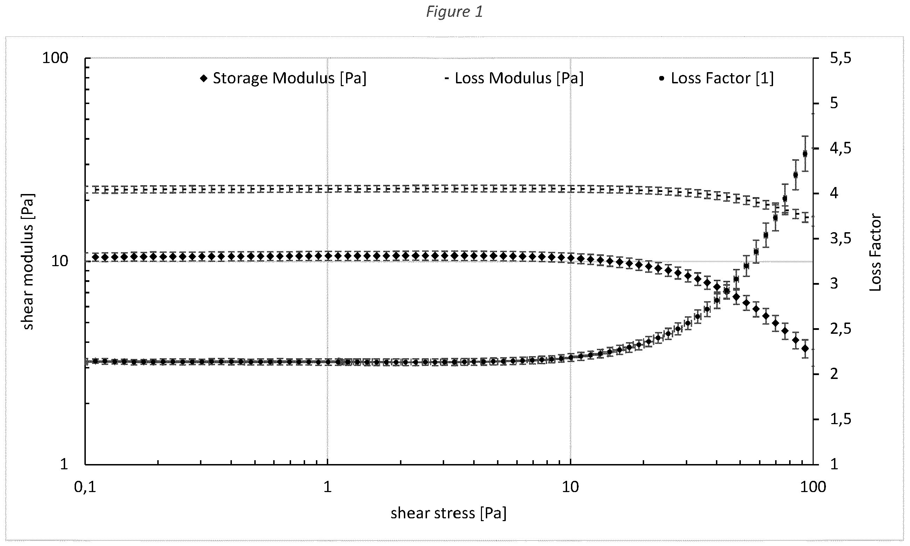

Figure 1 shows one aspect of the rheological behaviour of the limonene-based natural rubber solution used in the example section as a three-dimensional graph of shear modulus and loss factor over shear stress.

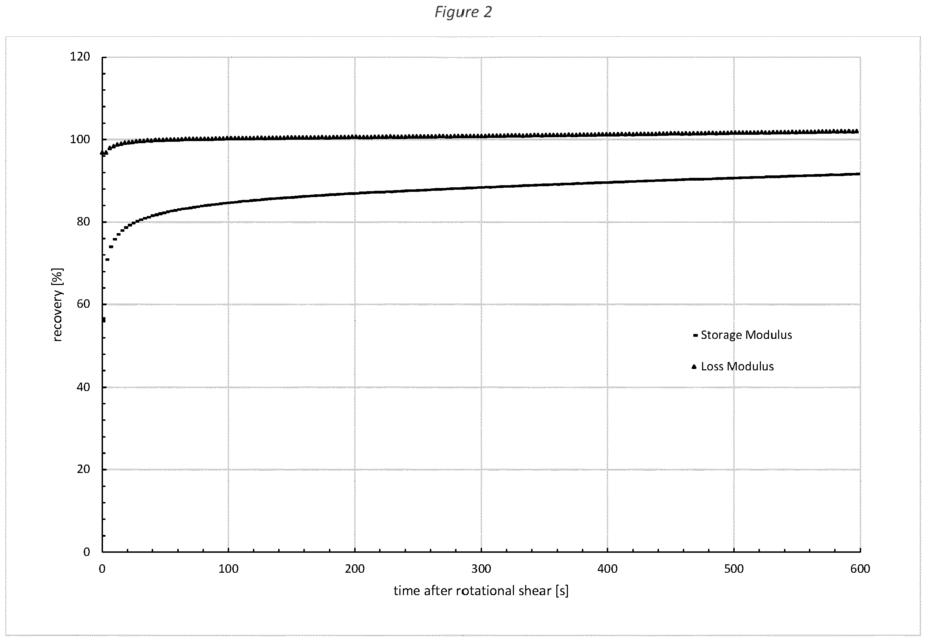

Figure 2 shows another aspect of the rheological behaviour of the limonene-based natural rubber solution used in the example section as a graph of the recovery of storage modulus and loss modulus over time after rotational shear.

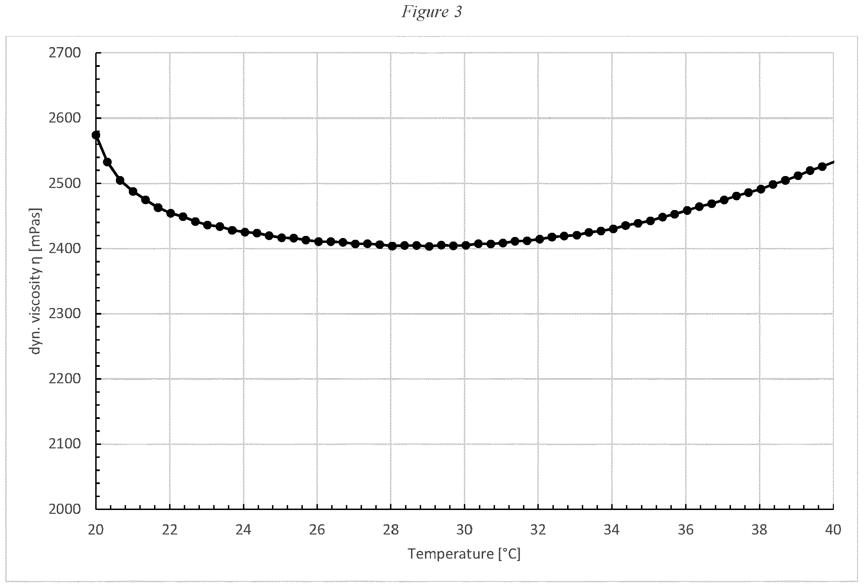

Figure 3 shows a third aspect of the rheological behaviour of the limonene-based natural rubber solution used in the example section as a graph of dynamic viscosity eta over temperature.

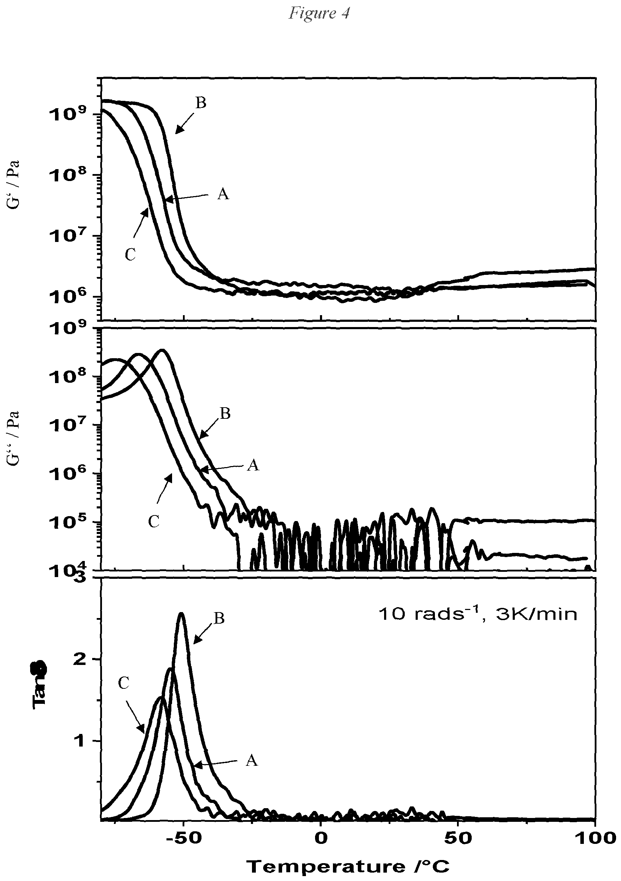

Figure 4 shows the rheological behaviour of three cross-linked natural rubbers used in the example section as graphs of glass transition temperature tan δ, storage module G' and loss module G" over temperature.

### Detailed Description of the Invention

The present invention discloses a natural rubber solution that comprises a natural rubber and at least one terpene.

The natural rubber can be selected from the group consisting of Standard Malaysian rubber, Standard African rubber and Standard Thai rubber, Standard Indonesian Rubber, Standard Nigerian Rubber, Standard Vietnamese Rubber, Standard Chinese Rubber, dandelion rubber, guayule rubber and combinations thereof.

Preferably the natural rubber is selected from Standard Malaysian rubber, Standard African rubber and Standard Thai rubber and combinations thereof.

It is preferred that the natural rubber solution comprises natural rubber in a content of 0.01 to 99 phr (w/v), preferably 0.1 to 25 phr (w/v), more preferably 1 to 10 phr (w/v) based on the volume of the terpene.

Phr (w/w) is used as the unit to describe the parts by weight per hundred parts of rubber by weight and phr (w/v) to describe parts by weight per hundred parts of rubber by volume. Terpenes are organic compounds built up from isoprene subunits and have been predominantly found in plants. Since natural rubber is also build-up of isoprene subunits, it is classified as a polyterpene.

In order to obtain a natural rubber solution, at least one terpene is added to the natural rubber, preferably a liquid terpene is used as the solvating agent.

Preferably, the terpene is selected from the group of polylimonene, limonene, carvone, α-pinene, citral, 1,8-cineole, eucalyptol, citronellol, geraniol, geranylgeraniol, citronellen, terpinen-4-ol, borneol, camphor, guayule resin, farnesene, and combinations thereof.

More preferably, the terpene is selected from the group consisting of limonene, carvone, α-pinene, citral, 1,8-cineole, eucalyptol, citronellol, geraniol, geranylgeraniol, citronellen, terpinen-4-ol and farnesene.

Most preferably, the terpene is limonene.

Terpenes and terpene resins that are solid under usual ambient temperatures and pressures can be liquefied by increasing the temperature and/or decreasing the pressure before adding the natural rubber.

### Anti-aging agents:

It is preferred that the solution further comprises at least one anti-aging agent.

Since natural rubbers and most terpenes contain alkene moieties that are prone to oxidation, the longevity of the natural rubber solution can be prolonged by using an anti-aging agent as additive. Anti-aging agents are materials that inhibit or slow the oxidation/aging process of the material by being themselves oxidized. Therefore, a natural rubber solution comprising an anti-aging agent remains unaltered for a longer period of time in an oxidizing environment, e.g. air. Anti-aging agents can be selected from butylated hydroxytoluene (BHT); vitamin E in at least one stereoisomeric form such as tocopherol and tocotrienol, or a derivative thereof; N-C1-12 alkyl-N'-phenyl-p-phenylenediamines such as N-isopropyl-N'-phenyl-p-phenylenediamine, N-1,3-dimethylbutyl-N'-phenyl-p-phenylenediamine (6PPD), N-1,4-dimethylpentyl-N'-phenyl-p-phenylenediamine (7PPD), N,N'-bis-1,4-(1,4-dimethylpentyl)-p-phenylenediamine (77PD), diaryl-p-phenylenediamine (DTPD), 4,4'-bis(C1-12-alkylamino)triphenylamine; 7,8-dimethylisoalloxazine or a derivative thereof such as riboflavin; p-phenylenediamine; p-di(nitroso)arene such as poly-p-di(nitroso)benzene, oligomerized 2,2,4-trimethyl-1,2-dihydroquinoline (TMQ), styrenated diphenylamine (DDA), cumylated diphenylamine, Zinc salt of 4- and 5-methylmercaptobenzimidazol, Zinc salt of di-n-butyldithiocarbamic acid, 2,6-di-*tert-*butylphenol, 2,6-di-*tert*-butyl-4-ethylphenol, 2,2'-methylen-bis(6-*tert*-butyl)-p-cresol, poly(dicyclopentadien-co-p-cresol), n-octadecyl-β-(4-hydroxy-3,5-di-tert-butyl-phenyl)-propionate, 2,2'-methylen-bis-(4-methyl-6-*tert*-butylphenol) (BPH), 2-methyl-4,6-bis(octylsulfanylmethyl)phenol, thiobisphenole, 4,4'-bis-(1,1-dimethylbenzyl)-diphenylamine (CDPA), octylated diphenylamine (ODPA), phenyl-a-naphthylamine (PAN), phenyl-β-naphthylamine (PBN), tris(nonylphenyl)phosphite, sodium hypophosphite, 2,2,4-trimethyl-1,2-dihydroquinoline (TMQ), 2-mercaptobenzimidazol (MBI), methyl-2-mercaptobenzimidazol (MMBI), and a mixture of reaction products between p-cresol and dicyclopentadiene corresponding to formula (I) 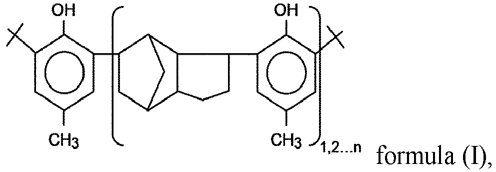 wherein n is any integer from 1 to 9,
or combinations thereof.

Preferably, the anti-aging agent is a bio-based anti-aging agent, more preferably the anti-aging agent is butylated hydroxytoluene (BHT).

In order for the anti-aging agent to show the desired protecting effect, the total content of the anti-aging agent should be at least 0.01 phr (w/w), preferably 0.05 to 5 phr (w/w), more preferably 0.1 to 3.5 phr (w/w), even more preferably 0.25 to 2 phr (w/w) and most preferably 0.4 to 1.0 phr (w/w) based on the natural rubber content.

In accordance with the disclosed invention the dissolved natural rubber can have a weight average molecular weight Mw of from 1.0 to 10.0 × 10⁷ g/mol, preferably from 1.15 to 5.0 × 10⁷ g/mol, most preferably from 1.4 to 3.5 × 10⁷ g/mol determined by ThFFF measurement. The obtained polydispersity index PD, being the ratio of Mw/Mn, is preferably from 5.0 to 20.0, preferably from 5.5 to 17.5, most preferably from 6.0 to 15.0 determined by ThFFF measurement.

The z average molecular weight Mz can be from 5.0 to 35 × 10⁷ g/mol, preferably from 7.5 to 30 × 10⁷ g/mol, most preferably from 10.0 to 25.0 × 10⁷ g/mol, determined by ThFFF measurement.

The weight average gyration radius Rw can be from 10 to 110 nm, preferably from 20 to 100 nm, most preferably from 30 to 90 nm determined by ThFFF measurement.

Further, the natural rubber solution can have a dynamic shear viscosity at a constant shear rate of 50 s⁻¹ of from 2300 to 2700 mPas when measured in dynamic shear measurements at a temperature of from 20 to 40°C.

### Process to obtain a natural rubber solution:

The natural rubber solutions with the above described characteristics can be obtained under mild conditions in a straight forward manner.

The process for obtaining the above described inventive natural rubber solutions comprises the following steps:
a. Providing a natural rubber;
b. Adding the natural rubber to a liquid terpene to obtain a mixture of solid natural rubber in liquid terpene; and
c. Incubating the mixture obtained in step b at a temperature in the range of 20 °C to 60°C, preferably 30°C to 50°, more preferably 35°C to 45°C until the natural rubber is dissolved.

In order to decrease the time for the dissolution of the natural rubber, it is advantageous to shred the natural rubber into pieces before adding to the liquid terpene in step b.

The incubating in step c can be done with any know mixing technique in any known mixing apparatus. Preferably, the mixture is mixed in a roller mixer or drum mixer, more preferably in a roller mixer.

Terpenes and terpene resins that are solid under usual ambient temperatures and pressures can be liquefied by increasing the temperature and/or decreasing the pressure before adding the natural rubber.

### Process to obtain a natural rubber solution comprising an anti-aging agent:

Since a natural rubber solution comprising an additional anti-aging agent has beneficial characteristics with regards to the longevity of the natural rubber and terpene, an anti-aging agent may be introduced to the mixture of the solid natural rubber in liquid terpene in step b.

Therefore, a process for obtaining a natural rubber solution comprising an anti-aging agent comprises the following steps:
a. Providing a natural rubber;
b. Adding the natural rubber to a liquid terpene to obtain a mixture of solid natural rubber in liquid terpene;
   b1. Adding an anti-aging agent to the mixture obtained in step b; and
c. Incubating the mixture obtained in step b1 at a temperature in the range of 25 °C to 60°C, preferably 30°C to 50°, more preferably 35°C to 45°C until the natural rubber is dissolved.

The added anti-aging agent may consist exclusively of one anti-aging agent or a combination of anti-aging agents as described above.

### Process to obtain a cross-linked natural rubber:

Cross-linking changes the physical properties of the respective polymer material by linking polymer chains to each other through covalent or ionic bonds. These bonds increase the rigidity of the polymer material and thus raise the glass transition temperature of the polymer material.

Oxidative cross-linking agents can form covalent bonds between polymer chains by oxidizing double bonds.

To obtain a cross-linked natural rubber according to the present invention, a cross-linking agent can be added to the natural rubber solutions obtained after step c in one of the above described processes.

Therefore, a process for obtaining a cross-linked natural rubber comprises the following steps:
a. Providing a natural rubber;
b. Adding the natural rubber (and optionally an anti-aging agent) to a liquid terpene to obtain a mixture of solid natural rubber in liquid terpene;
   b1. Optionally adding an anti-aging agent to the mixture obtained in step b;
c. Incubating the mixture obtained in step b at a temperature in the range of 25 °C to 60°C, preferably 30°C to 50°, more preferably 35°C to 45°C until the natural rubber is dissolved;
d. Adding a cross-linking agent;
e. Drying the natural rubber solution containing a cross-linking agent; and
f. Heating the dried natural rubber containing a cross-linking agent obtained in step e.

The cross-linking agent can be selected from elemental sulfur, elemental selenium, elemental tellurium, sulfur compounds, peroxides, quinone compounds, amine compounds, resinous compounds, metal oxides and isocyanates. In a preferred embodiment, the cross-linking agent is a peroxide, more preferably dicumyl peroxide.

The cross-linking agent is preferably added in an amount of 0.01 to 3 phr (w/w), more preferably 0.5 to 1.5 phr (w/w) based on the amount of natural rubber.

Depending on the amount of the added cross-linking agent, a cross-linked natural rubber can be obtained with a glass transition temperature, measured as tan δ in a dynamic mechanical analysis (DMA) of from -70°C to -43°C.

The cross-linking of the natural rubber occurs in step f during the heating of the dried natural rubber containing a cross-linking agent obtained in step e.

Heating in step f is preferably performed at a temperature in the range of 50 °C to 250 °C, preferably 100 °C to 200 °C, more preferably 130 °C to 180 °C.

### Experimental procedure and examples

### Measuring methods

### Rheological behaviour

The experimental characterisation of the natural rubber solution's rheological behaviour was done on an Anton Paar MCR 302 rheometer. It is equipped with a Peltier plate & hood temperature control for high temperature uniformity. Cone & Plate measuring system was chosen with 50 mm diameter, 1° cone angle and 102 µm cone truncation. Viscosity curves were obtained at different temperatures (20-40 °C) and at shear rates between 0.1 - 1000 s⁻¹.

### Molecular weight distribution and gyration radius

The molecular weight distribution of poly(cis-1,4-isoprene) within the extracts were determined using a TF2000 thermal field-flow fractionation (ThFFF) system coupled to MALS and ELS detectors (Postnova Analytics, Germany). The extracts were dissolved at 40 °C in toluene or limonene to a final concentration of 5 mg ml⁻¹. The samples were then centrifuged for 60 min at 1000 g and the supernatant was diluted 1:3 with toluene. The fractionation was carried out with an injection volume of 100 µl and toluene as the carrier liquid with a flow rate of 0.2 ml min⁻¹. The signals obtained from the ELS detector and the MALS angles 28-156° were used for the calculation with the following parameters: Random coil as calculation type, dn/dc value 0.104 ml g⁻¹, extinction 0.62 ml g⁻¹ cm⁻¹.

### Glass transition temperature

Dynamic mechanical analysis of shear deformation was performed on samples with stripe geometry on an Anton Paar MCR 501 TwinDrive. Following parameters were used: Sample dimension: 10 mm (width) × 2 mm (depth) × 25 mm (height), measuring frequency: 10 rad s⁻¹, deformation amplitude: 0.05 %, temperature range: -80 to 60°C, heating rate: 3 K min⁻¹.

### General procedure:

Standard Malaysian rubber (SMR) was shredded into pieces having a volume of 0.5 cm³ and added to the solvating agent in an amount of 6.625 phr (w/v) based on the volume of the solvating agent. Butylated hydroxytoluene (BHT) was added to the mixture in an amount of 0.5 phr (w/w) based on the content of natural rubber. The obtained mixture was heated to 40 °C and mixed with a roller mixer for 48 hours.

**Table 1: Molecular weight distribution and gyration radii of SMR 1 and SMR 2 with limonene or toluene as solvating agent.**

| ***Natural rubber in solvating agent*** | ***Mn [g*/*mol]*** | ***Mw [g*/*mol]*** | ***Mz [g*/*mol]*** | ***PD*** | ***Rn [nm]*** | ***Rw [nm]*** | ***Rz [nm]*** |
|---|---|---|---|---|---|---|---|
| *SMR 1 in Limonene* | *2.84 × 10⁶* | *2.20 × 10⁷* | *1.81 × 10⁸* | *7.72* | *29.8* | *50.3* | *124.2* |
| *SMR 2 in Limonene* | *2.14 × 10⁶* | *1.65 × 10⁷* | *1.97 × 10⁸* | *7.71* | *11.2* | *32.6* | *109.7* |
| *SMR 1 in Toluene* | *8.43 × 10⁵* | *1.06 × 10⁷* | *6.89 × 10⁷* | *12.6* | *44.9* | *88.2* | *139.7* |
| *SMR 2 in Toluene* | *1.01 × 10⁶* | *4.98 × 10⁶* | *2.73 × 10⁷* | *4.92* | *41.6* | *64.9* | *108.4* |

SMR 1 and SMR 2 are Standard Malaysian rubbers from different commercial batches.

The natural rubber solutions with limonene were honey-like, highly viscous and non-polar.

The measured average molar masses, i.e. number average molar mass (Mn), mass average molar mass (Mw) and Z-average molar mass (Mz) of the natural rubber solutions with limonene were higher compared to the comparative natural rubber solutions with toluene, showing the increased capability of terpenes to solve longer polymer chains.

The gyration radii (number average gyration radius Rn, mass average gyration radius Rw and Z-average gyration radius Rz) of the rubber solutions are reduced when limonene is used as solvating agent. This effect might be due to a reduced swelling of polyisoprene in limonene in comparison to toluene.

### Figure 1:

The rheological study of the limonene-based natural rubber solution (SMR1 in limonene) showed that the shear modulus of the loss modulus G" was higher than of the storage modulus G' for shear forces between 0.1 and 100 Pa. This demonstrates that no gelation is present and that the natural rubber solution is essentially a viscoelastic liquid because for gels the ratio between G" and G' (loss factor) is less than 1 and for viscoelastic liquids more than 1.

The study furthermore shows a linear viscoelastic (LVE) range between 0.1 and 10 Pa.

The yield point, indicating the limit of elastic behavior and the beginning of plastic behavior can be determined to be around 10 Pa, because the storage modulus begins to decrease after 10 Pa.

### Figure 2:

Furthermore, no cross-linking of the viscoelastic limonene-based natural rubber solution (SMR1 in limonene) can be observed because the recovery rate for the storage G' (80 phr) and loss modulus G" (100 phr) was around 20 seconds after the rotational sheer.

### Figure 3:

Measurement of the dynamic viscosity at a constant shear rate of 50 s⁻¹ in the temperature range of 20 °C to 40 °C showed a temperature dependency with the minimum being at around 29 °C.

### Natural rubber containing cross-linking agent solution (NRCLS):

The solid natural rubber (SMR) was shredded into pieces having a volume of 0.5 cm³ and added to the solvating agent. Butylated hydroxytoluene (BHT) was added to the mixture. The obtained mixture was heated to 40 °C and mixed in a roller mixer for 48 hours. After cooling, dicumyl peroxide was added and the blend mixed for another 5 min.

**Table 2: Amount of natural rubber, solvating-, anti-aging and cross-linking agent for NRCLS 1 to 3.**

| | Parts natural rubber | Solvating agent (SA) | Parts anti-aging agent BHT | Parts cross-linking agent Dicumyl peroxide |
|---|---|---|---|---|
| NRCLS 1 | 6.625 phr (w/v) (volume SA) | limonene | 0.5 phr (w/w) (natural rubber) | 1 phr (w/w) (natural rubber) |
| NRCLS 2 | 3.75 phr (w/v) (volume SA) | chlorofor m | 0.5 phr (w/w) (natural rubber) | 1 phr (w/w) (natural rubber) |
| NRCLS 3 | 6.625 phr (w/v) (volume SA) | limonene | 0.5 phr (w/w) (natural rubber) | 1 phr (w/w) (mass SA) |

Afterwards the mixture was poured into a mold and the natural rubber containing a cross-linking agent solution dried.

### Cross-linked natural rubbers (CLNR):

Samples of the obtained natural rubbers containing cross-linking agent (NRCL) pressed at 160 °C to cross-link the polymers and a subsequent dynamic mechanical analysis was performed on the cross-linked natural rubbers (CLNR).

**Table 3: Glass transition temperature of the inventive CLNR 1 and 3 and the comparative CLNR 2.**

| | CLNR 1 (A) | CLNR 2 (B) | CLNR 3 (C) |
|---|---|---|---|
| Glass transition temperature | -55 °C | -50 °C | -58 °C |

### Figure 4:

The dynamic mechanical analysis showed a parallel course for elasticity and loss modulus of the obtained cross-linked natural rubbers CLNR 1 to 3 with maxima of tan δ at -55 °C for CLNR 1(A), -50 °C for the comparative CLNR2(B) and -58 °C for CLNR2(C).

The comparative CLNR2 shows a substantially higher glass transition temperature than the two inventive cross-linked natural rubbers CLNR1 and CLNR3.

Further, the amount of used cross-linking agent has a direct influence on the glass transition temperature of the obtained cross-linked natural rubbers. The difference between CLNR1 and CLNR3 is the amount of dicumyl peroxide, which results in 3 °C difference in glass transition temperature.

## Claims

1. A natural rubber solution, **characterized in that** the solution comprises
i) a natural rubber, and
ii) at least one terpene.

2. The natural rubber solution according to claim 1, **characterized in that** the natural rubber is selected from the group consisting of Standard Malaysian rubber, Standard African rubber and Standard Thai rubber, Standard Indonesian Rubber, Standard Nigerian Rubber, Standard Vietnamese Rubber, Standard Chinese Rubber, dandelion rubber, guayule rubber and combinations thereof, preferably Standard Malaysian rubber, Standard African rubber and Standard Thai rubber and combinations thereof.

3. The natural rubber solution according to claim 1 or 2, **characterized in that** the at least one terpene is selected from the group consisting of polylimonene, limonene, carvone, α-pinene, citral, 1,8-cineole, eucalyptol, citronellol, geraniol, geranylgeraniol, citronellen, terpinen-4-ol, borneol, camphor, guayule resin, farnesene, and combinations thereof, preferably is selected from the group consisting of limonene, carvone, α-pinene, citral, 1,8 cineole, eucalyptol, citronellol, geraniol, geranylgeraniol, citronellen, terpinen-4-ol and farnesene, more preferably, is limonene.

4. The natural rubber solution according to any one of claims 1 to 3, **characterized in that** the solution comprises natural rubber in a content of 0.01 to 99 phr (w/v), preferably 0.1 to 25 phr (w/v), more preferably 1 to 10 phr (w/v) based on the volume of the terpene.

5. The natural rubber solution according to any one of claims 1 to 4, **characterized in that** the solution further comprises at least one anti-aging agent.

6. The natural rubber solution according to claim 5, **characterized in that** the anti-aging agent is selected from the group consisting of butylated hydroxytoluene (BHT); vitamin E in at least one stereoisomeric form such as tocopherol and tocotrienol, or a derivative thereof; N-C1-12 alkyl-N'-phenyl-p-phenylenediamines such as N-isopropyl-N'-phenyl-p-phenylenediamine, N-1,3-dimethylbutyl-N'-phenyl-p-phenylenediamine (6PPD), N-1,4-dimethylpentyl-N'-phenyl-p-phenylenediamine (7PPD), N,N'-bis-1,4-(1,4-dimethylpentyl)-p-phenylenediamine (77PD), diaryl-p-phenylenediamine (DTPD), 4,4'-bis(C1-12-alkylamino)triphenylamine; 7,8-dimethylisoalloxazine or a derivative thereof such as riboflavin; p-phenylenediamine; p-di(nitroso)arene such as poly-p-di(nitroso)benzene, oligomerized 2,2,4-trimethyl-1,2-dihydro-quinoline (TMQ), styrenated diphenylamine (DDA), cumylated diphenylamine, Zinc salt of 4- and 5-methylmercaptobenzimidazol, Zinc salt of di-n-butyldithiocarbamic acid, 2,6-di*-tert*butylphenol, 2,6-di-*tert*-butyl-4-ethylphenol, 2,2'-methylen-bis(6-*tert*-butyl)-p-cresol, poly(dicyclopentadien-co-p-cresol), n-octadecyl-β-(4-hydroxy-3,5-di-tert-butylphenyl)-propionate, 2,2'-methylen-bis-(4-methyl-6-*tert*-butylphenol) (BPH), 2-methyl-4,6-bis(octylsulfanylmethyl)phenol, thiobisphenole, 4,4'-bis-(1,1-dimethylbenzyl)-diphenylamine (CDPA), octylated diphenylamine (ODPA), phenyl-a-naphthylamine (PAN), phenyl-β-naphthylamine (PBN), tris(nonylphenyl)phosphite, sodium hypophosphite, 2,2,4-trimethyl-1,2-dihydroquinoline (TMQ), 2-mercaptobenzimidazol (MBI), methyl-2-mercaptobenzimidazol (MMBI), and a mixture of reaction products between p-cresol and dicyclopentadiene corresponding to formula (I) 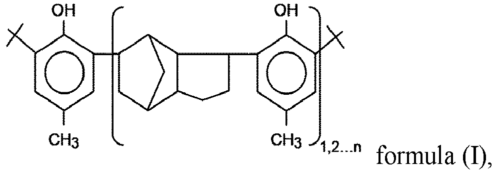 wherein n is any integer from 1 to 9,
or combinations thereof, preferably the anti-aging agent is a bio-based anti-aging agent, more preferably the anti-aging agent is butylated hydroxytoluene (BHT).

7. The natural rubber solution according to claims 5 or 6, **characterized in that** the total content of the anti-aging agent is at least 0.01 phr (w/w), preferably 0.05 to 5 phr (w/w), more preferably 0.1 to 3.5 phr (w/w), even more preferably 0.25 to 2 phr (w/w) and most preferably 0.4 to 1.0 phr (w/w) based on the natural rubber content.

8. The natural rubber solution according to any one of claims 1 to 7, wherein the dissolved natural rubber has one or more, or all of the following parameters:
- a weight average molecular weight Mw of from 1.0 to 10.0 × 10⁷ g/mol determined by ThFFF measurement, and/or
- a polydispersity index PD, being the ratio of Mw/Mn, of from 5.0 to 20.0 determined by ThFFF measurement, and/or
- a Z average molecular weight Mz of from 5.0 to 35 × 10⁷ g/mol determined by ThFFF measurement, and/or
- a weight average gyration radius Rw of from 10 to 110 nm, preferably from 20 to 100 nm, most preferably from 30 to 90 nm determined by ThFFF measurement, and/or
wherein the natural rubber solution has a dynamic shear viscosity at a constant shear rate of 50 s⁻¹ of from 2300 to 2700 mPas when measured in dynamic shear measurements at a temperature of from 20 to 40°C.

9. A process for obtaining the natural rubber solution according to any one of claims 1 to 8, **characterized in that** the process comprises the following steps:
a. Providing a natural rubber;
b. Adding the natural rubber to a liquid terpene to obtain a mixture of solid natural rubber in liquid terpene; and
c. Incubating the mixture obtained in step b at a temperature in the range of 25 °C to 60°C, preferably 30°C to 50°, more preferably 35°C to 45°C until the natural rubber is dissolved.

10. The process according to claim 15, **characterized in that** the natural rubber is shredded into pieces before adding to the liquid terpene in step b and/or at least one anti-aging agent is added to the mixture of solid natural rubber in liquid terpene obtained in step b.

11. A process for obtaining a cross-linked natural rubber, **characterized in that** the process according to claims 9 or 10 further comprises additional steps
d. Adding a cross-linking agent; and
e. Drying the natural rubber solution containing a cross-linking agent; and
f. Heating the dried natural rubber containing a cross-linking agent obtained in step e.

12. The process for obtaining a cross-linked natural rubber according to claim 11, **characterized in that** the cross-linking agent is added in step d in an amount of 0.01 to 3 phr (w/w), preferably 0.5 to 1.5 phr (w/w) based on the amount of natural rubber and/or **characterized in that** the cross-linking agent is dicumyl peroxide.

13. The process for obtaining a cross-linked natural rubber according to claims 11 or 12, **characterized in that** the heating in step f is performed at a temperature in the range of 50 °C to 250 °C, preferably 100 °C to 200 °C, more preferably 130 °C to 180 °C.

14. A cross-linked natural rubber obtainable by the process according to any one of claims 11 to 13 having a glass transition temperature of from -70°C to -43°C, measured as tan δ in a dynamic mechanical analysis.

15. A use of the natural rubber solution according to any one of claims 1 to 10 as a thickener, opacifier, lubricant, paint, as a basis for solid natural rubber and in elastic coatings, elastic joints, elastic moldings, elastic sealings and elastic films.
